# EUROPEAN PATENT SPECIFICATION

(11) **EP 2 177 408 B1**
(45) Date of publication and mention of the grant of the patent: **18.01.2012**
(21) Application number: 09006158.1
(22) Date of filing: 06.05.2009
(51) Int. Cl.: B60T 7/10, G05G 1/04

(54) **Parking brake**
Feststellbremse
Frein à main

(30) Priority: 17.10.2008 IT TO20080762
(43) Date of publication of application: 21.04.2010
(73) Proprietor: Sistemi Comandi Meccanici S.C.M. S.p.A., 20011 Corbetta (MI) (IT)
(72) Inventor: Cavaglia, Renato, 10040 Volvera (TO) (IT); Ballari, Marco, 10040 Volvera (TO) (IT)
(74) Representative: Di Gennaro, Sergio

(56) References cited:
- EP-A- 0 704 334
- EP-A- 0 960 792
- EP-A- 1 081 418
- FR-A- 2 758 771
- FR-A- 2 762 659
- US-A1- 2007 018 353

## Description

The present invention refers to a parking brake for a vehicle of the kind having an operating lever realized in plastic material, for example a lever so-called "cloche lever".

Parking brakes provided with operating levers of the brake realized in plastic material are known.

Their stress resistance is obtained by means of appropriate reinforcement ribbings preferably realized in metal. The advantages of said levers in comparison to the traditional metal levers are the lightness, the absence of noise and the limited production cost.

The major inconvenient of this kind of levers concerns the fact that, in case of fire, it is not possible to guarantee the holding of the braking condition of the parking brake thus enabling the vehicle to move without control, owing to the loss of the function of the plastic lever, with the consequent loss of fastening points of the feedback cable to the mechanism of the brake positioned on the wheels.

The European patent N° 960792 describes a brake of this kind, wherein in case of loss of the function of the operating plastic lever, a metal plate basically triangular in shape connects the three pins that determine the movement of the lever and blocks the movement of the lever itself, preventing the release of the parking brake. Said metal plate is associated to the plastic lever by means of said pins. Furthermore, the so-called overmoulding techniques by means of which two objects of different material, for example plastics or metal, can be embedded, covered or joined, are also known.

The overmoulding technique allows the embedding of a metal object in the plastics, in order to make it stronger and to obtain also airtight elements.

The Applicant has perceived that this technique can be advantageously applied to realize a parking brake for a vehicle. Particularly, by means of the overmoulding technique between plastics and metal it is possible to integrate a plate, of metal or other equivalent material, to the operating lever, directly during the overmoulding of the lever itself. Therefore, it will be no more necessary to add successive completing operations for the completion of the lever to obtain the above mentioned contents, because they are integrally realized.

Furthermore, said plate presents an U-shaped profile for giving more strength to it and for facilitating the adhesion to the plastic lever during the overmoulding operations.

An aspect of the present invention refers to a parking brake having the characteristics of the attached claim 1.

Other additional characteristics of the brake according to the present invention are contained in the successive depending claims.

The characteristics and the advantages of the brake according to the present invention shall be highlighted by the following description, given as an example and not limiting purposes, with reference to the attached figures that show respectively:

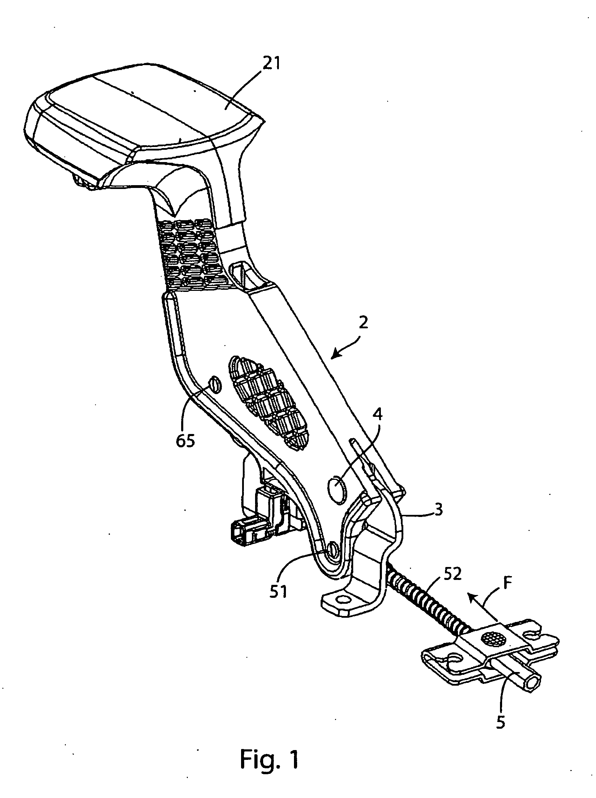

- Figure 1 shows a perspective view of the parking brake according to the present invention;

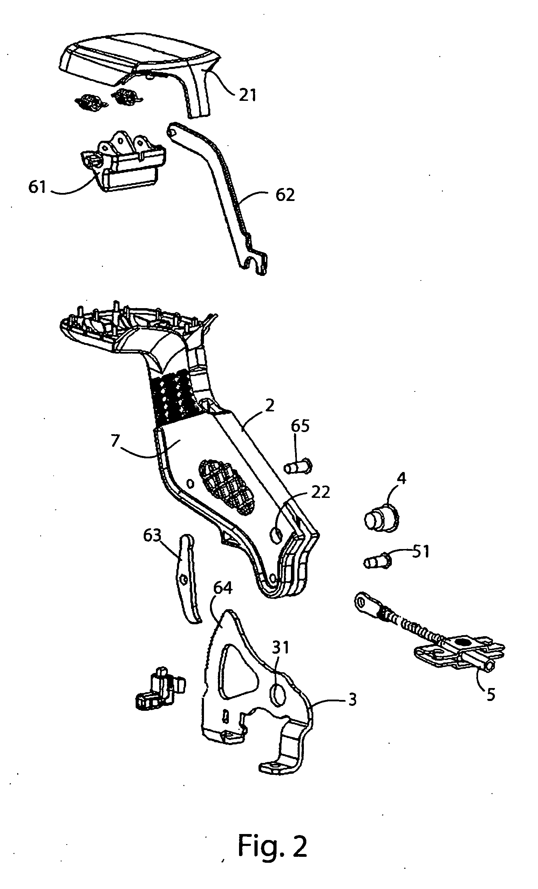

- Figure 2 shows a perspective exploded view of the parking brake according to the present invention;

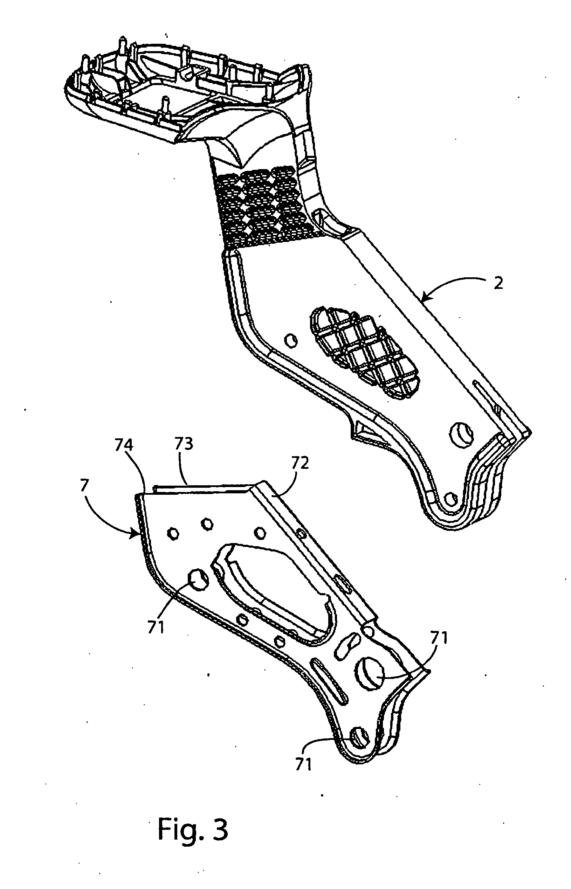

- Figure 3 shows a perspective exploded view of the operating lever and of the shaped plate;
- Figure 4 shows a perspective view of the shaped plate.

According to said figures, the parking brake according to the present invention comprises an operating lever 2 realized in plastic material, provided with a handle 21 at one end, and at the other end with means of articulated constraint at one bracket 3, fixed or obtained on the tunnel of the vehicle, so that it can be lifted up and down in comparison to the plane of the tunnel. Said means of constraint being realized by a pin 4 that inserts in the corresponding holes 22 and 31 of the lever and the bracket respectively.

The handle 21 can be realized integrally with the lever or can be separately provided and constrained to the upper part of the lever itself, for example with a fixed joint.

The brake also comprises a device for operating the brake of the vehicle that includes a transmission tie rod 5, connected by means of a pin 51 to the lever on the end opposed to the one provided with the handle 21. When the lever is in the lifted up position, the transmission tie rod is drawn in the direction of the arrow F so that to transmit the movement of the lever to the operating device of the parking brake that blocks the wheels of the vehicle by means of the connecting cables (not shown). Furthermore, there is a spring 52 on the tie rod that always keeps the pin tensioned outwards, so that to ease its connection to the cables.

Said device for blocking comprises a lever 61, preferably positioned under the handle by means of which, with the interposition of a transmission bar 62, a detent 63, preferably rocker-lever shaped, pivoted on a pin 65, is moved.

The detent acts on a toothed sector 64, obtained on the bracket 3 and particularly obtained on the rear perimeter portion of said bracket.

During the lifting phase of the lever, the lever 61 can be manually operated, or also not stressed, because the detent can slide on the toothed sector. Once the lifting is terminated, the detent 63 inserts into one of the notches of the toothed sector 64, blocking the movement of the lever. The elastic tie rod 52 prevents the accidental release of the lever, that is allowed only by the action on the release lever 61.

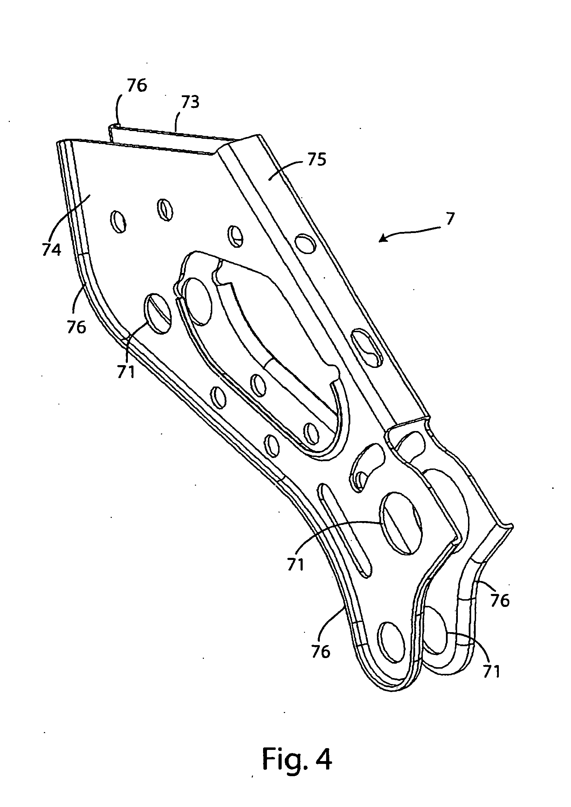

According to the present invention, with the purpose to prevent, in case of loss of the function of the lever 2 due to a fire or other causes, the release of the parking brake thus enabling the vehicle to move without control, the pin 65 acting as the fulcrum pivot for the detent 63, the fulcrum pivot 4 of the lever 2 and the pin 51 for the connection of the tie rod 5, insert into holes 71 of a plate of strengthening 7 associated to said lever. The plate is shown in details in figure 4 and is preferably metallic or realized in a material that shows fire retardant features equivalent to the metal (for example, Kevlar).

Furthermore, it is directly overmoulded with said lever and comprises two identical slabs 73 and 74 jointed by a portion of connection 75, so that they realize an "U-type" shaping that improves the strength of the plate when it is embedded into the lever. Preferably, the slabs and the portion of connection are realized in a unique part. The slabs have a shape substantially identical to the one of the lever wherein they are inserted; furthermore, the external edges 76 of both the slabs are turned outside so that they help the connection between the plate and the lever during the overmoulding.

## Claims

1. A parking brake for a vehicle comprising:
an operating lever (2) realized in plastic material and provided with an handle (21) at one end, and at the other end with means of articulated constraint at one bracket (3) fixed or obtained on the tunnel of the vehicle so that it can be lifted up and down in comparison to the plane of the tunnel;
an operating device of the brake of the vehicle that comprises a transmission tie rod (5) connected to the lever itself, on the end opposed to the one provided with the handle (21);
a locking device for blocking the movement of the operating lever (2) comprising a detent (63) pivoted on a pin (65) that acts on a toothed sector (64) obtained on the bracket (3);
the pin (65), a fulcrum pivot (4) of the lever, and a pin (51) for the connection of the tie rod (5) to the lever, inserted in holes (71) of a plate of strengthening (7) associated to said lever,
said plate comprising two identical slabs (73, 74) jointed by a portion of connection (75), so that they realize a "U-type" shaping,
the external edges (76) of both the slabs being turned outside so that they help the connection between the plate and the lever during the overmoulding **characterised in that** said plate (7) is overmoulded together with the lever (2).

2. Brake according to claim 1, wherein said plate is metallic, or realized in a material that shows fire retardant features equivalent to the metal.

3. Brake according to claim 1, wherein said slabs and said portion of connection are realized in a unique part.

4. Brake according to claim 1, wherein said slabs have a shape substantially identical to the one of the lever wherein they are inserted.

## Patentansprüche

1. Feststellbremse für ein Fahrzeug, die aufweist:
einen Betätigungshebel (2), der in Kunststoffmaterial ausgeführt und an einem Ende mit einem Griff (21) und am anderen Ende mit einer Einrichtung zur gelenkigen Hemmung an einem Bügel (3) versehen ist, der so auf dem Tunnel des Fahrzeugs befestigt oder erzielt wird, dass er im Vergleich zur Ebene des Tunnels gehoben oder gesenkt werden kann;
eine Betätigungsvorrichtung für die Bremse des Fahrzeugs, die an dem Ende gegenüber demjenigen, das mit dem Griff (21) versehen ist, eine mit dem Hebel verbundene, übertragende Verbindungsstange (5) aufweist;
eine Sperrvorrichtung zum Verhindern der Bewegung des Betätigungshebels (2), die eine an einem Stift (65) drehbar befestigte Einrastvorrichtung (63) aufweist, die auf einen auf dem Bügel (3) erzielten, gezahnten Sektor (64) wirkt;
den Stift (65), einen Drehzapfen (4) des Hebels und einen Stift (51) für die Verbindung der Verbindungsstange (5) mit dem Hebel in Löchern (71) einer eingesetzten, mit dem Hebel verbundenen Verstärkungsplatte (7),
wobei die Platte zwei identische Scheiben (73, 74) aufweist, die durch einen Verbindungsteil (75) so zusammengefügt sind, dass sie ein U-förmiges Gebilde darstellen,
wobei die äußeren Kanten (76) der beiden Scheiben so nach außen gedreht sind, dass sie die Verbindung zwischen der Platte und dem Hebel während des Umspritzens unterstützen, **dadurch gekennzeichnet, dass** die Platte (7) zusammen mit dem Hebel (2) umspritzt wird.

2. Bremse gemäß Anspruch 1, bei der die Platte metallisch ist oder in einem Material ausgeführt ist, das feuerhemmende Eigenschaften besitzt, die dem Metall gleichwertig sind.

3. Bremse gemäß Anspruch 1, bei der die Scheiben und der Verbindungsteil in einem einzigen Stück ausgeführt sind.

4. Bremse gemäß Anspruch 1, bei der die Scheiben eine Form besitzen, die mit derjenigen des Hebels, in den sie eingesetzt sind, im Wesentlichen identisch ist.

## Revendications

1. Frein à main pour un véhicule, comprenant:
un levier de commande (2) réalisé en matière plastique et muni d'une poignée (21) à une extrémité, et à l'autre extrémité de moyens de contrainte articulés sur un support d'attache (3) fixé ou obtenu sur le tunnel du véhicule de telle sorte qu'il peut être relevé ou abaissé par rapport au plan du tunnel;
un dispositif de commande du frein du véhicule qui comprend une tige de raccordement pour transmission (5), reliée au levier lui-même, sur l'extrémité opposée à celle munie de la poignée (21);
un dispositif de verrouillage pour bloquer le mouvement du levier de commande (2), comprenant un goujon d'arrêt (63) pivotant sur une cheville (65) qui agit sur un secteur denté (64) obtenu sur le support d'attache (3);
la cheville (65), un pivot d'appui (4) du levier, et une cheville (51) pour la connexion de la tige de raccordement (5) au levier, dans des trous (71) d'une plaque de renforcement insérée (7), associée audit levier,
ladite plaque comprenant deux plaques identiques (73, 74) reliées par une portion de connexion (75), de telle manière qu'elles réalisent une configuration "de type en U",
les bords externes (76) des deux plaques étant tournés vers l'extérieur de telle sorte qu'ils aident à la connexion entre la plaque et le levier pendant le surmoulage,
**caractérisé en ce que** ladite plaque (7) est surmoulée conjointement avec le levier (2).

2. Frein selon la revendication 1, dans lequel ladite plaque est en métal, ou réalisée en une matière qui présente des caractéristiques de retardateur de flamme équivalentes au métal.

3. Frein selon la revendication 1, dans lequel lesdites plaques et ladite portion de connexion sont réalisées en une seule partie.

4. Frein selon la revendication 1, dans lequel lesdites plaques ont une forme substantiellement identique à celle du levier dans lequel elles sont insérées.
